# EUROPÄISCHE PATENTANMELDUNG

(11) **EP 0 623 646 A2**
(43) Veröffentlichungstag der Anmeldung: **09.11.1994**
(21) Anmeldenummer: 94106710.0
(22) Anmeldetag: 29.04.1994
(51) Int. Cl.: C08K 3/00, B65D 1/00, C08L 101/00

(54) **Verpackungsmaterial zur Herstellung von Faltschachteln**

(30) Priorität: 05.05.1993 DE 4314837
(71) Anmelder: BP Chemicals PlasTec GmbH, D-89165 Dietenheim (DE); PCD-Polymere Gesellschaft m.b.H., A-2323 Schwechat-Mannswörth (AT)
(72) Erfinder: Schnäbele, Jürgen, D-82347 Bernried (DE); Schmidt, Norwin, D- 89233 Neu-Ulm/Reutti (DE); Lüdemann, Henning, D-87700 Memmingen (DE); Wolfsberger, Anton, A-4020 Linz (AT); Grünberger, Manfred, A-4050 Traun (AT)
(74) Vertreter: Hoeger, Stellrecht & Partner

(57) **Zusammenfassung**

Es wird ein Kunststoff-Verpackungsmaterial als Karton- oder Pappersatzstoff zur Herstellung von Faltschachteln vorgeschlagen, wobei das Material eine Polymermatrix umfaßt, welche einen partikelförmigen Füllstoff enthält, wobei der Füllstoff mit einem Anteil von 20 bis 60 Gew. % - bezogen auf die gefüllte Matrix - enthalten ist und wobei die Kohäsionskräfte zwischen Füllstoff und Matrix kleiner sind als die Kohäsionskräfte in der Matrix selbst.

## Beschreibung

Die Erfindung betrifft ein Kunststoff-Verpackungsmaterial als Karton- oder Pappersatzstoff zur Herstellung von Faltschachteln.

Faltschachteln sind zwar bislang schon auf Kunststoffbasis bekannt, werden jedoch nach wie vor ganz überwiegend aus Pappe bzw. Karton gefertigt, da bisher die Verwendung von Kunststoff-Folien als Verpackungsmaterial andere Verarbeitungsmaschinen erfordert hat und auch sonstige Nachteile aufweist, wie sie unter anderem in der Einleitung der US-Patentschrift 3,727,825 erwähnt sind.

Aus diesem US-Patent 3,727,825 ist eine Faltschachtel aus Kunststoff-Folie bekannt, bei der mit einem speziellen Werkzeug die Faltlinien thermisch in das Material eingeformt werden, so daß die ansonsten zu beobachtende Ausbauchung der Seitenwandung der Faltschachtel aufgrund der Rückstellkräfte des Kunststoffmaterials vermieden wird. Dieses Erfordernis bei der Herstellung hat insbesondere zu einer mangelnden Akzeptanz auf dem Verpackungsmarkt geführt.

Aufgabe der Erfindung ist es, ein eingangs beschriebenes Verpackungsmaterial vorzuschlagen, das sich konventionell wie Pappe und Karton zu Faltschachteln verarbeiten und insbesondere kaltverformen läßt.

Diese Aufgabe wird erfindungsgemäß dadurch gelöst, daß das Material eine Polymermatrix umfaßt, welche einen partikelförmigen Füllstoff enthält, wobei der Füllstoff mit einem Anteil von 20 bis 60 Gew.% - bezogen auf die gefüllte Matrix - enthalten ist und wobei die Kohäsionskräfte zwischen Füllstoff und Matrix kleiner sind als die Kohäsionskräfte in der Matrix selbst.

Erstaunlicherweise lassen sich mit einer Füllung der Polymermatrix mit partikelförmigen Füllstoffen der oben beschriebenen Art die Rückstelleigenschaften der gefüllten Polymermatrix so beeinflussen, daß diese wie normaler Karton bzw. wie normale Pappe geschnitten bzw. gestanzt, gefaltet und zur Schachtel verarbeitet werden können. Eine Verarbeitung in dieser Weise benötigt keine Wärmezufuhr und kann bei Raumtemperatur geschehen.

Besondere Bedeutung hat dieses Verpackungsmaterial durch seine hundertprozentige Recycelbarkeit, da bei Faltschachteln aus Pappe oder Karton nur ein Teil des Materials aus Altpapier bzw. Altpappe bestehen darf. Da bei dem Recycelvorgang die Papierfasern stets verkürzt werden, sind in der recycelten Papier- bzw. Pappmasse keine ausreichenden Anteile an langfasriger Zellulose mehr enthalten, so daß das Material beim Falten in den Knickbereichen bzw. beim Öffnen und Schließen der Schachteln bricht oder es sind allenfalls nur wenige Öffnungs- und Schließvorgänge möglich bis zum Ein- oder Abreißen der Deckelteile.

Das vorliegend vorgeschlagene Material kann bedeutend häufiger im Kreislauf geführt werden, ohne daß die Faltbarkeit und die Stabilität der Faltkanten darunter leiden würden.

Übliche Wandstärken des erfindungsgemäßen Verpackungsmaterials zur Herstellung von Faltschachteln sind 100 µm bis 400 µm.

Dieses Verpackungsmaterial ist insbesondere deshalb interessant, weil sich damit leicht eine Wasserdampf undurchlässige, verschweißbare, insbesondere HF-siegelfähig ausrüstbare, gegebenenfalls sogar aromadichte Verpackung herstellen läßt.

Für das für die Polymermatrix zu verwendende Polymer steht eine breite Palette von verschiedenen Polymermaterialien zur Verfügung, insbesondere Polyolefine, PVC, Polyester, Polystyrol und/- oder Copolymerisate hiervon.

Besonders bevorzugt werden Polyolefine, insbesondere Polypropylene, verwendet, da diese insbesondere auch für die Verpackung von Lebensmitteln geeignet und zugelassen sind.

Das mittlere Molekulargewicht der Polymere in der Kunststoffmatrix wird vorzugsweise im Bereich von ca. 10.000 bis ca. 750.000 angesiedelt, und sowohl über die Wahl des Polymers für die Polymermatrix selbst als auch über sein Molekulargewicht läßt sich ein Verpackungsmaterial mit den für den gewünschten Anwendungsfall erforderlichen Eigenschaften exakt zuschneiden.

Das erfindungsgemäße Verpackungsmaterial enthält den Füllstoff als homogene Zumischung zu einem bereits fertig auspolymerisierten Kunststoffmaterial. Der Füllstoff wird also nicht - wie dies im Zusammenhang mit füllstoffverstärkten Kunststoffen bekannt ist - in der Polymerisationsreaktionsmischung aus Monomer und/oder Präpolymer dispergiert und während des Aushärtens der Reaktionsmischung in die Kunststoffmatrix eingebaut. Selbstverständlich ist es aber denkbar, solches verstärktes Kunststoffmaterial als Kunststoffmatrix in bestimmten Anwendungsfällen auch im Zusammenhang mit der vorliegenden Erfindung zu benutzen.

Für die Füllstoffe der Folie steht eine breite Palette an Füllstoffen zur Verfügung. Diese können aus anorganischen und/oder organischen Substanzen ausgewählt sein.

Bevorzugte Beispiele für die organischen Substanzen sind z.B. halogenierte Kohlenwasserstoffpolymere, insbesondere PTFE, Polyethersulfone, die wie das PTFE einen Fixpunkt von > 300° C aufweisen, sowie duroplastische Kunststoffe. Bei den organischen Substanzen, die als Füllstoffe dienen sollen, ist wichtig, daß sich diese bei der Verarbeitung des Kunststoffmatrixmaterials, bei der Temperaturen von 220° C und mehr auftreten können, nicht verflüssigen und dann eine homogene Lösung mit dem Kunststoffmatrixmaterial bilden, sondern daß diese im wesentlichen in Partikelform in der Kunststoffmatrix während der Verarbeitung erhalten bleiben und so zu einer Verbesserung der Kaltverformbarkeit führen.

Für den partikelförmigen Füllstoff kommt ebenfalls eine breite Palette von Materialien in Frage, und zwar nicht nur anorganische sondern auch organische Substanzen, wie zum Beispiel halogenierte Kohlenwasserstoffpolymere, insbesondere PTFE, Polyethersulfone und/oder duroplastische Kunststoffe.

Als anorganische Füllstoffe können solche aus der Reihe der Siliciumdioxide, insbesondere in Form von Glas oder Quarz, Silikate, insbesondere Talkum, Titanate, TiO₂, Aluminiumoxid, Kaolin, Calciumcarbonate, insbesondere in Form von Kreide, Magnesite, MgO, Eisenoxide, Siliciumcarbide, Siliciumnitride, Bariumsulfat und dergleichen gewählt werden.

Die Form der Füllstoffpartikel wird wohl am häufigsten granular sein, aber auch plättchenförmige, faserförmige oder stabförmige Füllstoffpartikel sind sowohl als im wesentlichen einheitliche Form oder auch in Mischung mit anderen Formen als Füllstoffpartikel möglich.

Titandioxid eignet sich nicht nur als Füllstoff, sondern gleichzeitig, dann insbesondere in sehr feiner Mahlung, als Pigment zur Verbesserung des Kontrastes bei einer Bedruckung der Schachteln bzw. zur Herstellung von weißen Schachteln überhaupt.

Bevorzugt wird der Anteil des Füllstoffes an der gefüllten Matrix 25 bis 45 Gew.% betragen, weiter bevorzugt 35 bis 40 Gew.%.

Die Bedruckbarkeit des Verpackungsmaterials ist jedoch unabhängig in dem gesamten Füllstoffbereich von 20 bis 60 Gew.% gegeben. Vor der Bedruckung muß das Verpackungsmaterial allerdings einer Vorbehandlung unterzogen werden, zum Beispiel einer Corona-Entladung.

Weitere Zusätze sind neben dem Pigment TiO₂ Antistatikmittel, um Verschmutzungen beim Druckvorgang zu reduzieren.

Außerdem soll natürlich erreicht werden, daß die Füllstoffpartikel eine möglichst gleichmäßige Verteilung in der Kunststoffmatrix erhalten und auch beim Produktionsprozeß beibehalten, so daß man bevorzugt Hilfsmittel zugibt, welche die Dispergierbarkeit der Füllstoffpartikel in der Matrix verbessern.

Als Dispergierhilfsmittel eignen sich insbesondere niedrigschmelzende organische Substanzen, welche eine große Benetzungsfähigkeit für den Füllstoff aufweisen. Konkrete Beispiele sind niedermolekulare Polyolefinwachse. Die Dispergierhilfsmittel werden bevorzugt auf die Füllstoffpartikel aufgebracht, bevor diese mit dem Granulat des Matrixkunststoffs vermischt, insbesondere geknetet werden.

Die wichtigsten Vorteile des erfindungsgemäßen Verpackungsmaterials sind neben der problemlosen Verarbeitbarkeit, die keine anderen Maschinen und Gerätschaften verlangt wie für die Bearbeitung von Karton, die Kaltverformbarkeit der Kunststoffe, die Wasserdampfdichtheit der Verpackung sowie die Möglichkeit, die Packung aromadicht zu verschließen. Darüber hinaus ist das Verschließen möglich, ohne daß Klebstoffe verwendet werden, die häufig genug Stoffe freisetzen, die bei der Verpackung von Lebensmitteln unerwünscht sind.

Das erfindungsgemäße Verpackungsmaterial eigent sich insbesondere zur Herstellung von Faltschachteln für die Verpackung von Zigaretten und von pharmazeutischen Produkten.

Durch die Möglichkeit der aroma- und wasserdampfdichten Verpackung kann zum Beispiel gegenüber herkömmlichen Zigarettenpackungen die Aluminiumfolie und OPP-Einschlagfolie entfallen. Aus verpackungstechnischen Gründen kann es notwendig sein, die Zigaretten vor dem Einschieben in die Packung zu bündeln, jedoch kann hierfür dann auf Polypropylenmaterial oder andere Kunststoffmaterialien zurückgegriffen werden, die gleichfalls für die Herstellung der Faltschachteln verwendet werden, diesmal jedoch in wesentlich dünnerer Form.

Dies bedeutet, daß sich unter Verwendung des erfindungsgemäßen Verpackungsmaterials eine sortenreine Faltschachtelverpackung für eine Vielzahl von Anwendungsbereichen herstellen läßt, und zwar insbesondere auch für Anwendungsbereiche, bei denen sehr hohe Anforderungen an die Faltschachtelverpackung gestellt werden.

Ein wichtiger Vorteil für die breite Einführung des erfindungsgemäßen Verpackungsmaterials liegt in dessen Kaltverformbarkeit und in der Verarbeitbarkeit wie Karton. Damit ist in bestehenden Produktionsanlagen das neue Material ohne Umstellung zu verwenden, und somit kann eine rasche Umstellung auf eine sortenreine Verpackungsart ohne anlagemäßige Investitionen erfolgen.

Im folgenden sei eine besonders bevorzugte Rezeptur für das Verpackungsmaterial angegeben:
57 Gew.% Polypropylen
37 Gew.% Talkum, mittlere Partikelgröße ca. 20 µm
3 Gew.% Farbmasterbatch mit ca. 70 Gew.% Farbpigmenten (TiO₂ etc.), Rest LDPE
3 Gew.% Antistatik-Masterbatch mit ca. 10 Gew.% Wirkstoff (Alkylamin), Rest Polypropylen
Die Anteile an Farbmasterbatch und Antistatik-Masterbatch lassen sich je nach Bedarf variieren, liegen jedoch häufig im Bereich von jeweils 2 bis 5 Gew.%.

Als Antistatikbeschichtungsmittel kommen sowohl kationaktive, anionaktive als auch nichtionogene Verbindungen in Frage. Auch amphotere Verbindungen können als Antistatika eingesetzt werden. Von besonderer Bedeutung sind quartäre Ammoniumverbindungen.

Wichtig ist jedenfalls, daß die Antistatika so zudosiert werden, daß der Oberflächenwiderstand des erfindungsgemäßen Verpackungsmaterials auf etwa 10⁸ bis 10¹⁰Ω erniedrigt ist.

Die Herstellung des erfindungsgemäßen Verpackungsmaterials sei im folgenden anhand eines Beispieles noch näher erläutert:
Beim ersten Schritt wird ein Polymergranulat mit den Füllstoffanteilen vermischt und nachfolgend extrudiert oder kalandriert. Die Vermischung, insbesondere die Homogenisierung, kann durch Kneten nach bekannten Verfahren, insbesondere der Doppelschneckencompoundierung, erfolgen. Die Einzelkomponenten können aber auch in einem Trockenmischverfahren miteinander vermischt werden. Eine bessere Homogenität, d.h. eine gleichmäßigere Verteilung der Füllstoffe in der Polymermatrix, wird durch die vorgeschaltete Herstellung eines sogenannten Compounds erreicht.

Eine Behandlung der Füllstoffpartikel mit Dispergierhilfsmitteln sollte in jedem Fall vor der Vermengung mit dem Matrix-Kunststoff erfolgen.

Das Compound wird im Extruder geschmolzen, und zwar bei Massetemperaturen von ca. 220° C und mehr sowie bei einem Massedruck von bis zu 250 bar. Die Abkühlung der Schmelze erfolgt vorzugsweise über eine Chill-roll bei 20° C bis ca. 40° C, aber auch andere Abkühlverfahren, gegebenenfalls mit einer Oberflächenbehandlung mit Corona-Entladung kombiniert, sind möglich.

Das erfindungsgemäße Kunststoff-Verpackungsmaterial läßt sich zudem auch als dreilagiges Verbundmaterial ausbilden, welches eine aufgeschäumte Mittelschicht beinhaltet. Die Gesamtdicke wird hier bevorzugt 0,2 bis 2,5 mm betragen.

Durch das Aufschäumen der Mittelschicht läßt sich die Dichte des Materials um ca. 30 bis 50 % verringern. Die Gesamtdichte verringert sich entsprechend den Dickenverhältnissen von Mittel- und Außenschichten.

Als chemische Treibmittel lassen sich wie üblich Azodicarbonamid, Hydrazinderivate, Tetrazole u.a. verwenden, die bei höheren Temperaturen Gas, d.h. insbesondere Stickstoff, freisetzen. Das Aufschäumen der Mittelschicht kann aber auch durch Direktbegasung der Masse im Extruder erfolgen. Dies ist jedoch bei einer Polypropylenmatrix weniger bevorzugt.

Diese Verpackungsmaterialien mit aufgeschäumter Mittelschicht eignen sich insbesondere als Ersatz für Kartonzuschnitte für Einleger bei Textilverpackungen, Blisterpackungsunterteile, Reiteretiketten, Displayverpackungen und ähnliche Artikel
Die Zusammensetzung der Schichten kann verschieden oder auch gleich sein, d.h. es ist möglich, das dreilagige Verpackungsmaterial sortenrein herzustellen. Der Füllstoffgehalt stört den Aufschäumprozeß nicht. Ferner gilt auch für das dreilagige Material, daß es faltbar ist, ohne daß dabei eine Warmverformung vorgenommen werden müßte.

## Patentansprüche

1. Kunststoff-Verpackungsmaterial als Karton- oder Pappersatzstoff zur Herstellung von Faltschachteln und anderen Verpackungen, dadurch gekennzeichnet, daß das Material eine Polymermatrix umfaßt, welche einen partikelförmigen Füllstoff enthält, der mit einem Anteil von 20 bis 60 Gew.% - bezogen auf die gefüllte Matrix - enthalten ist und wobei die Kohäsionskräfte zwischen Füllstoff und Matrix kleiner sind als die Kohäsionskräfte in der Matrix selbst.

2. Verpackungsmaterial nach Anspruch 1, dadurch gekennzeichnet, daß die Polymermatrix im wesentlichen aus Polyolefinen, PVC, Polyester, Polystyrol oder Copolymerisaten hiervon gebildet ist.

3. Verpackungsmaterial nach Anspruch 2, dadurch gekennzeichnet, daß als Polyolefine überwiegend Polypropylene und/oder Copolymerisate hiervon verwendet sind.

4. Verpackungsmaterial nach einem der Ansprüche 1 bis 3, dadurch gekennzeichnet, daß die Polymere der Kunststoffmatrix ein mittleres Molekulargewicht von ca. 10.000 bis ca. 750.000 aufweisen.

5. Verpackungsmaterial nach einem der voranstehenden Ansprüche, dadurch gekennzeichnet, daß die Polymermatrix ein im wesentlichen Wasserdampf undurchlässiges Material ist.

6. Verpackungsmaterial nach einem der Ansprüche 1 bis 5, dadurch gekennzeichnet, daß die Polymermatrix verschweißbar, insbesondere HF-versiegelbar ausgerüstet ist.

7. Verpackungsmaterial nach einem der voranstehenden Ansprüche, dadurch gekennzeichnet, daß der partikelförmige Füllstoff im wesentlichen aus SiO₂, insbesondere in Form von Glas oder Quarz, Silikaten, insbesondere Talkum, Titanaten, TiO₂, Aluminiumoxid, Kaolin, Calciumcarbonaten, insbesondere in Form von Kreide, Magnesiten, MgO, Eisenoxiden, Siliciumcarbiden, Siliciumnitriden, Bariumsulfat und dergleichen gebildet ist.

8. Verpackungsmaterial nach Anspruch 7, dadurch gekennzeichnet, daß der Füllstoff granular, plättchenförmig, faserförmig oder stabförmig ist.

9. Verpackungsmaterial nach Anspruch 7 oder 8, dadurch gekennzeichnet, daß die Partikelgröße des Füllstoffes (gemessen über die größte Ausdehnung des Partikels) im Mittel ca. 5 µm bis ca. 100 µm, bevorzugt 10 bis 50 µm, beträgt.

10. Verpackungsmaterial nach einem der voranstehenden Ansprüche, dadurch gekennzeichnet, daß der Füllstoffanteil an der gefüllten Matrix 25 bis 45 Gew.% beträgt.

11. Verpackungsmaterial nach einem der voranstehenden Ansprüche, dadurch gekennzeichnet, daß TiO₂ in Pigmentform und gegebenenfalls Antistatikmittel in der Polymermatrix enthalten sind.

12. Verpackungsmaterial nach einem der voranstehenden Ansprüche, dadurch gekennzeichnet, daß das Verpackungsmaterial zum Bedrucken vorbehandelt ist, insbesondere einer Corona-Behandlung unterzogen worden ist.

13. Verpackungsmaterial nach einem der voranstehenden Ansprüche, dadurch gekennzeichnet, daß das Material eine geschäumte Mittelschicht zwischen zwei Außenschichten umfaßt.

14. Verpackungsmaterial nach Anspruch 13, dadurch gekennzeichnet, daß die Mittelschicht eine um 30 bis 50 % geringere Dichte als die Außenschichten aufweist.

15. Verpackungsmaterial nach Anspruch 13 oder 14, dadurch gekennzeichnet, daß die Mittelschicht eine Dicke von 0,2 bis 2,5 mm aufweist.

16. Verpackungsmaterial nach einem der Ansprüche 13 bis 15, dadurch gekennzeichnet, daß mindestens eine der Außenschichten als Siegelschicht ausgebildet ist.

17. Verwendung des Verpackungsmaterials nach einem der Ansprüche 1 bis 16 zur Herstellung von Faltschachteln, insbesondere zur Verpackung von Zigaretten und pharmazeutischen Produkten.
